# EUROPÄISCHE PATENTSCHRIFT

(11) **EP 4 014 746 B1**
(45) Veröffentlichungstag und Bekanntmachung des Hinweises auf die Patenterteilung: **10.09.2025**
(21) Anmeldenummer: 21201237.1
(22) Anmeldetag: 06.10.2021
(51) Int. Cl.: A23G 1/00, A23G 3/02, A23G 1/18

(54) **TEMPERIERMASCHINE MIT FESTSTEHENDER TRENNSCHEIBE**
TEMPERING MACHINE WITH FIXED SEPARATING DISC
MACHINE DE THERMORÉGULATION POURVUE DE VITRE DE SÉPARATION FIXE

(30) Priorität: 21.12.2020 DE 102020134349
(43) Veröffentlichungstag der Anmeldung: 22.06.2022
(73) Patentinhaber: Sollich KG, 32105 Bad Salzuflen (DE)
(72) Erfinder: Bäumer, Volker, 32108 Bad Salzuflen (DE)
(74) Vertreter: REHBERG HÜPPE + PARTNER

(56) Entgegenhaltungen:
- EP-A1- 1 004 244
- WO-A1-97/25579
- DE-A1- 10 329 177
- DE-A1- 19 849 099

## Beschreibung

### TECHNISCHES GEBIET DER ERFINDUNG

Die Erfindung betrifft eine Temperiermaschine zum Temperieren einer Süßwarenmasse.

Bei der Süßwarenmasse handelt es sich um eine kakaobutterhaltige Masse oder eine ähnliche Fett enthaltende Masse, insbesondere eine Schokolademasse. Unter der Temperierung einer derartigen Masse wird eine definierte wärmemäßige Behandlung verstanden, deren Ziel es ist, bestimmte stabile Fettkristalle in der Masse auszubilden und einen definierten Temperiergrad zu erreichen.

### STAND DER TECHNIK

Eine Temperiermaschine zum Temperieren einer Süßwarenmasse ist aus der deutschen Patentanmeldung DE 198 54 204 A1 bekannt. Die Temperiermaschine ist als Temperiersäule und Scheibentemperer mit einer Mehrzahl von Behandlungsstufen ausgebildet. Zwischen zwei benachbarten Temperiermediumkammern für den Durchfluss eines Temperiermediums ist jeweils eine Süßwarenmassenkammer für den Durchfluss der Süßwarenmasse gebildet. In der Süßwarenmassenkammer ist ein drehend angetriebenes Mischwerkzeug angeordnet. Das Mischwerkzeug ist als Scheibe ausgebildet, auf deren Oberseite und Unterseite jeweils Mischelemente angeordnet sind. Die Scheibe weist eine Nabe auf, die über eine Passfederverbindung drehfest mit einer Antriebswelle verbunden ist. Der Außendurchmesser der Scheibe ist kleiner als der Innendurchmesser des Gehäuses der Temperiermaschine, so dass radial außen ein kreisringförmiger Durchtrittsspalt gebildet wird. Die Süßwarenmasse, die radial innen in die Süßwarenmassekammer eintritt, muss die Süßwarenmassenkammer in radialer Richtung nach außen durchlaufen, um dann durch den Durchtrittsspalt auf die Oberseite der Scheibe zu gelangen. Hierbei wird die Süßwarenmasse durch das rotierend angetriebene Mischwerkzeug durchmischt. Das Mischwerkzeug erfüllt somit nicht nur die Funktion des Mischens, sondern auch die der Trennung der Süßwarenmassenkammer in zwei Teilkammern.

Weitere Temperiermaschine zum Temperieren einer Süßwarenmasse sind aus der deutschen Patentanmeldung DE 198 49 099 A1 und der Europäischen Patentanmeldung EP 0 872 187 A1 bekannt.

Aus der DE 103 29 177 A1 ist eine Temperiervorrichtung für Schokoladenmasse bekannt. In einem zylindrischen Gehäuse befindet sich eine zentrale Welle, auf der scheibenförmige Rotoren angebracht sind. Auf der Ober- und Unterseite der Rotoren sind Erhebungen angebracht, die für eine gute Mischwirkung der Rotoren sorgen. Im Gehäuse sind mehrere Statoren untergebracht. Zwei benachbarte Statoren bilden mit einem dazwischen angeordneten Rotor zwei Mischereinheiten, und zwar eine oberhalb des Rotors und eine unterhalb der Rotorscheibe. Einige Statoren sind von einem Wärme- bzw. Kälteträgerfluid durchströmt. Dadurch wirkt die Statoroberfläche als Wärmeübertragungsfläche. In den Statoren sind Wellendurchführungen angeordnet, die einen größeren Durchmesser als die Welle besitzen. Durch den verbleibenden Spalt gelangt die Schokoladenmasse von einer Seite des Stators auf die andere Seite. Weiterhin ist zur Herstellung eines Bypasses in mindestens einem der Statoren eine weitere Aussparung vorgesehen, die sich außerhalb eines Kreises um die Wellendurchführung mit dem halben Radius der benachbarten Rotoren befindet und durch die ein Teilstrom der Masse von einer Seite des Stators auf die andere Seite gelangen kann. Im Bereich der weiteren Aussparung in einem Stator, der nicht von dem Wärme- bzw. Kälteträgerfluid durchströmt ist, kann ein Temperaturfühler für die Temperatur der Schokoladenmasse angeordnet werden.

Aus der WO 97/25579 A1 ist ein Wärmetauscher zur Wärmebehandlung eines Produkts bekannt. In einem zylindrischen Gehäuse sind Kassetten mit Kammern für Heiz-/Kühlmedium ausgebildet. Auf jeweils eine Kassette mit einer zentralen Öffnung um eine Antriebswelle folgt eine Kassette mit zwei Öffnungen an ihrem Außenumfang. In den zwischen zwei benachbarten Kassetten verbleibenden Produktkammern für das zu behandelnde Produkt rotieren mit Abstreifern versehene Scheiben, die mit dezentralen Öffnungen versehen sind und die jeweils über eine Nabe drehfest an der Antriebswelle gelagert sind. Die Naben erstrecken sich senkrecht zu den Scheiben, sie haben einen hexagonalen Innenumfang und sie sind mit wechselseitiger axialer Überlappung auf der Antriebswelle mit hexagonalem Außenumfang angeordnet.

### AUFGABE DER ERFINDUNG

Der Erfindung liegt die Aufgabe zugrunde, eine Temperiermaschine bereitzustellen, mit der der an der Temperiermaschine auftretende Verschleiß reduziert wird.

### LÖSUNG

Die Aufgabe der Erfindung wird erfindungsgemäß mit den Merkmalen des unabhängigen Patentanspruchs gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Temperiermaschine zum Temperieren einer Süßwarenmasse. Die Temperiermaschine weist eine erste Temperiermediumkammer für den Durchfluss eines Temperiermediums und eine in einer axialen Richtung der Temperiermaschine benachbarte zweite Temperiermediumkammer für den Durchfluss eines Temperiermediums auf. Eine Süßwarenmassekammer für den Durchfluss der Süßwarenmasse ist in der axialen Richtung zwischen der ersten Temperiermediumkammer und der zweiten Temperiermediumkammer angeordnet. Ein Mischwerkzeug ist zum Mischen der Süßwarenmasse drehend antreibbar in der Süßwarenmassekammer angeordnet. Eine Trennscheibe ist so in der Süßwarenmassekammer angeordnet, dass eine erste Teilkammer und eine zweite Teilkammer gebildet wird, wobei die Trennscheibe eine Durchtrittsöffnung aufweist, die für einen Durchfluss der Süßwarenmasse von der ersten Teilkammer in der axialen Richtung durch die Durchtrittsöffnung in die zweite Teilkammer ausgebildet ist.

Bei der Süßwarenmasse handelt es sich insbesondere um eine kakaobutterhaltige Masse oder eine ähnliche Fett enthaltende Masse, insbesondere eine Schokolademasse. Unter der Temperierung einer derartigen Masse wird eine definierte wärmemäßige Behandlung verstanden, deren Ziel es ist, bestimmte stabile Fettkristalle in der Masse auszubilden und einen definierten Temperiergrad zu erreichen.

In einer Süßwarenmassenkammer einer Temperiermaschine werden im Wesentlichen zwei Funktionen für die Süßwarenmasse erbracht. Bei der ersten Funktion ("Primärfunktion") handelt es sich um die wärmemäßige Behandlung der Süßwarenmasse über ein möglichst gleichmäßiges definiertes Zeitintervall. Dieses Zeitintervall bzw. die Verweildauer der Süßwarenmasse in der Süßwarenmassekammer wird durch eine Unterteilung der Süßwarenmassekammer in mindestens zwei Teilkammern vergleichmäßigt. Es wird verhindert, dass einzelne Teile der Süßwarenmasse mehr oder weniger direkt vom Eingang der Süßwarenmassekammer zu deren Ausgang gelangen und somit nicht ausreichend temperiert werden.

Bei der zweiten Funktion ("Sekundärfunktion") handelt es sich um die Durchmischung der in der Süßwarenmassekammer enthaltenen Süßwarenmasse. Durch diese Durchmischung wird sichergestellt, dass eine möglichst homogene wärmemäßige Behandlung und eine gleichmäßige Verteilung der Fettkristalle in der Süßwarenmasse erreicht werden.

Im Stand der Technik (siehe z. B. DE 198 54 204 A1) werden die Primärfunktion und Sekundärfunktion gemeinsam durch ein Kombinationsbauteil erbracht, bei dem es sich um eine drehend angetriebene Scheibe mit einem radial außen liegenden Durchtrittsspalt (= Primärfunktion) und an der Oberseite und der Unterseite angeordneten Mischelementen (= Sekundärfunktion) handelt. Bei der neuen Temperiermaschine werden hingegen die Primärfunktion und Sekundärfunktion von separaten Bauteilen erbracht. Die Primärfunktion wird durch eine Trennscheibe und die Sekundärfunktion durch ein drehend angetriebenes Mischwerkzeug erbracht. Durch diese Trennung der Funktionen ist eine unterschiedliche Lagerung der diese Funktionen erbringenden Bauteile möglich.

Die Erfindung hat erkannt, dass bei dem Kombinationsbauteil des Stands der Technik Nachteile auftreten können. Das Kombinationsbauteil ist mittels einer Passfederverbindung drehfest mit einer zentralen Welle der Temperiermaschine verbunden und durch diese angetrieben. In der axialen Richtung ist das Kombinationsbauteil verschieblich gelagert. In einer Temperiermaschine herrschen in den verschiedenen in axialer Richtung aufeinanderfolgenden Süßwarenmassekammern unterschiedliche Druckverhältnisse. Wenn die Süßwarenmasse im unteren Bereich der Temperiermaschine in diese eingebracht wird, herrscht in den unteren Süßwarenmassekammern ein höherer Druck als in den oberen Süßwarenmassekammern. Das Entsprechende gilt umgekehrt, wenn die Süßwarenmasse im oberen Bereich der Temperiermaschine in diese eingebracht wird. Aufgrund dieser Druckdifferenz ergibt sich eine entsprechende Kraft, die in der axialen Richtung auf das Kombinationsbauteil einwirkt. Hierdurch kommt es zu einem Kontakt der Mischelemente mit der axialen Innenoberfläche der Süßwarenmassekammer, woraus eine entsprechende Reibung und somit Verschleiß resultiert. Zusätzlich wird hierdurch die Kristallisation der Süßwarenmasse beeinträchtigt. Zudem kann sich eine Belastung der Getriebelagerung des Antriebs der zentralen Welle ergeben, wenn die Kräfte von dem Kombinationsbauteil über die Passfederverbindung in diese eingeleitet werden.

Die Trennscheibe ist feststehend in der Temperiermaschine angeordnet. Dies bedeutet, dass die Trennscheibe so gelagert ist, dass sie sich nicht drehen kann ("nicht-drehbare" Lagerung) und sie sich in der axialen Richtung nicht translatorisch verschieben kann ("nicht-verschiebliche" Lagerung). Eine geringfügige Bewegung im Sinne eines Spiels aufgrund von Toleranzen kann aber vorhanden sein.

Die Temperiermediumkammer kann scheibenartig ausgebildet sein und einen Innenraum aufweisen, durch den das Temperiermedium fließt. Der Innenraum wird durch verschiedene Elemente begrenzt bzw. definiert. Dazu gehören insbesondere ein Boden, ein Deckel und eine radial innenliegende Seitenwand. In dem Innenraum können ein oder mehrere Trennstege angeordnet sein. Der Trennsteg kann spiralförmig ausgebildet und angeordnet sein, so dass sich ein entsprechender Strömungspfad des Temperiermediums durch die Temperiermediumkammer und somit die gewünschte vergleichmäßigte Verweildauer und temperaturmäßige Wirkung ergibt. Das Temperiermedium wird insbesondere über eine Zuleitung der Temperiermediumkammer zugeführt und tritt durch eine Ausgangsleitung wieder aus dieser aus.

Die Süßwarenmassekammer kann in der axialen Richtung gesehen durch einen Deckel einer unteren ersten Temperiermediumkammer und einen Boden einer benachbarten darüber liegenden zweiten Temperiermediumkammer gebildet sein.

Die Temperiermaschine weist ein Gehäuse auf. In dem Gehäuse sind die verschiedenen Scheiben angeordnet, die die verschiedenen Kammern der Temperiermaschine bilden. Die Trennscheibe kann innen an dem Gehäuse gelagert sein. Die Lagerung der Trennscheibe erfolgt in diesem Fall also nicht radial innen - insbesondere nicht im Bereich einer zentralen Welle der Temperiermaschine -, sondern radial außen. Für die Lagerung kann die Trennscheiben beispielsweise einen radial außenliegenden Kragen oder Ring aufweisen, der gegenüber der Hauptoberfläche der Trennscheibe hervorgehoben ist. Die Trennscheibe besitzt dann also eine tablettartige Form mit einem die äußere Umfangsfläche bildenden erhöhten Rand. Der Rand kann einstückig mit der Trennscheibe oder getrennt von dieser ausgebildet und mit dieser verbunden sein. Der Rand ist in dem Gehäuse gelagert. Es wäre aber auch möglich, dass die Trennscheibe anders ausgebildet und/oder an einem anderen Teil der Temperiermaschine gelagert ist. Die Trennscheibe kann also auch radial innen gelagert sein.

Das Gehäuse kann eine zylindrische Form aufweisen. Die den Antrieb für die Mischwerkzeuge bereitstellende Welle stellt die Symmetrieachse des Zylinders dar. In dieser Weise sind die axiale Richtung und die radiale Richtung der Temperiermaschine definiert.

In der Süßwarenmassekammer können mehrere Mischwerkzeuge, insbesondere ein erstes Mischwerkzeug und ein zweites Mischwerkzeug, vorhanden sein. Das erste Mischwerkzeug ist dann in der ersten Teilkammer und das zweite Mischwerkzeug in der zweiten Teilkammer angeordnet. Somit ist sichergestellt, dass die gewünschte Durchmischung der Süßwarenmasse in beiden Teilkammern und somit während des gesamten Durchflusses der Süßwarenmasse durch die Süßwarenmassekammer gewährleistet ist.

Das Mischwerkzeug ist (oder die Mischwerkzeuge sind) mittels einer Lagereinrichtung derart an der Trennscheibe gelagert, dass eine rotatorische Bewegung relativ zu der Trennscheibe ermöglicht und eine translatorische Bewegung relativ zu der Trennscheibe auf die Trennscheibe zu verhindert oder eingeschränkt wird. Das Mischwerkzeug befindet sich dabei beabstandet zu der Oberfläche der Trennscheibe. Somit entsteht hier kein Kontakt und auch kein Verschleiß.

Die Lagereinrichtung kann ein Gleitlager aufweisen, mit dem das Mischwerkzeug auf der Oberfläche der Trennscheibe gelagert ist. Das Gleitlager kann beispielsweise einen auf der Trennscheibe aufliegenden Lagerring aufweisen. Der Lagerring arbeitet mit korrespondierenden Nuten in dem Mischwerkzeug zusammen. Der Lagerring dient dazu, einen Kontakt zwischen dem Mischwerkzeug und der Trennscheibe zu verhindern oder einzuschränken. In dieser Weise wird die Lage des Mischwerkzeugs in der axialen Richtung - mindestens in dem auf die Trennscheibe weisenden Richtungssinn - definiert und festgelegt.

Gleichzeitig kann die Lagereinrichtung so ausgebildet sein, dass das Mischwerkzeug auch nicht den Boden bzw. Deckel der benachbarten Temperiermediumkammer berühren kann. Somit entsteht auch hier kein Kontakt und kein Verschleiß.

Das erste Mischwerkzeug und das zweite Mischwerkzeug können fest miteinander verbunden sein. In dieser Weise wird eine Art "Doppelflügel" gebildet. Damit kann eine gemeinsame Drehung der beiden Mischwerkzeuge erreicht werden. Diese gemeinsame Drehung kann sich aber auch bereits daraus ergeben, dass beide Mischwerkzeuge durch die zentrale Welle der Temperiermaschine angetrieben werden. Die feste Verbindung führt aber jedenfalls dazu, dass sich die auf unterschiedlichen Seiten der Trennscheibe befindenden Mischwerkzeuge nur begrenzt (oder gar nicht) translatorisch in der axialen Richtung bewegen können. Auch hierdurch kann verhindert werden, dass die Mischwerkzeuge an die axialen Begrenzungsflächen der Süßwarenmassenkammer anstoßen und hier Verschleiß auftritt. Es ist aber auch möglich, dass die Mischwerkzeuge nicht direkt miteinander verbunden sind ("Einzelflügel"). Stattdessen besteht dann nur eine indirekte Verbindung über die zentrale Welle, die beide Mischwerkzeuge antreibt.

Eine Bewegung des Mischwerkzeugs in der axialen Richtung kann also - abgesehen von einem Spiel aufgrund von Toleranzen - vollständig verhindert, bewusst innerhalb definierter Grenzen eingeschränkt zugelassen oder frei zugelassen werden. Das jeweilige Ergebnis wird durch die Ausbildung der Lagereinrichtung sowie der Mischwerkzeuge als "Einzelflügel" oder als "Doppelflügel" erreicht.

Die Durchtrittsöffnung der Trennscheibe ist radial außen angeordnet. Dies ist so zu verstehen, dass die Durchtrittsöffnung zumindest in der Nähe des radialen Außenumfangs der Scheibe angeordnet ist. Es muss sich aber nicht um den radial äußersten Punkt handeln. Wenn dies aber der Fall ist, handelt es sich um eine randoffene Durchtrittsöffnung. Diese kann man auch als Durchtrittsspalt bezeichnen. Der Durchtrittsspalt kann sich um den gesamten Umfang oder nur einen Teil des Umfangs der Scheibe erstrecken.

Die Trennscheibe kann eine Mehrzahl von Durchtrittsöffnungen aufweisen, die randgeschlossen ausgebildet sind. Eine solche Ausbildung kommt insbesondere bei der oberhalb beschriebenen tablettartigen Geometrie der Trennscheibe in Frage. In diesem Fall können die Durchtrittsöffnungen insbesondere als beabstandete kreisringabschnittsförmige Langlöcher ausgebildet sein.

Jede der Temperiermediumkammern ist über eine Zuleitung und eine Ausgangsleitung an einen Temperiermediumkreislauf angeschlossen und wird von einem Temperiermedium durchströmt. Ein solcher Temperiermediumkreislauf wird auch als Temperierkreislauf bezeichnet. Jede Temperiermediumkammern kann ihren eigenen Temperierkreislauf aufweisen. Es ist aber auch möglich, dass mehrere Temperiermediumkammern an einen gemeinsamen Temperierkreislauf angeschlossen sind.

Es ist auch möglich, dass die Trennscheibe an einen Temperiermediumkreislauf angeschlossen ist und von einem Temperiermedium durchströmt wird. Wenn die Trennscheibe Teil der Kristallisationsstufe der Temperiermaschine ist, handelt es sich bei dem Temperiermedium um ein Kühlmittel, insbesondere kaltes Wasser.

Es können auch mehrere Trennscheiben in einer Süßwarenmassekammer angeordnet sein. Somit werden mehr als zwei Teilkammern gebildet. In jeder der Teilkammern kann ein Mischwerkzeug angeordnet sein. Es kann aber auch nur in einem Teil der Teilkammern ein Mischwerkzeug vorhanden sein.

Das Mischwerkzeug kann eine Mehrzahl beabstandet angeordneter Mischarme mit jeweils einer Mehrzahl von Mischelementen aufweisen. Beispielsweise können zwei, drei, vier, fünf, sechs oder acht Mischarme vorhanden sein. An jedem der Mischarme können beispielsweise zwei, drei, vier, fünf, sechs oder mehr Mischelemente angeordnet sein.

Bei den Mischelementen kann es sich beispielsweise um Stege oder Fortsätze handeln, die sich von dem jeweiligen Mischarm weg erstrecken.

Bei dem Mischwerkzeug kann es sich aber auch um eine Mischscheibe mit einer Mehrzahl von Mischelementen handeln. In diesem Fall können die Mischelemente beispielsweise als Bohrungen oder andere Ausnehmungen in der Scheibe ausgebildet sein. Derartige Bohrungen haben den Vorteil, dass sich an ihnen - im Gegensatz zu hervorstehenden Elementen - keine oder nur weniger Süßwarenmasse absetzen und aufbauen kann.

Die Temperiermaschine weist eine Welle auf, die sich in der axialen Richtung der Temperiermaschine erstreckt und diese Richtung definiert. Das Mischwerkzeug - bzw. die Mischwerkzeuge - ist durch die Welle drehend angetrieben. Die Welle wird in einer für sich genommen bekannten Weise mittels eines Drehantriebs drehend angetrieben. Die Drehzahl liegt dabei häufig in einem Bereich von zwischen etwa 15 und 100 Umdrehungen pro Minute, insbesondere zwischen etwa 20 und 60 Umdrehungen pro Minute.

In einer radialen Richtung zwischen der Welle und der ersten Temperiermediumkammer ist ein Eintrittsspalt gebildet sein, durch den die Süßwarenmasse in die Süßwarenmassekammer eintritt. In der radialen Richtung zwischen der Welle und der zweiten Temperiermediumkammer ist ein Austrittsspalt gebildet sein, durch den die Süßwarenmasse aus der Süßwarenmassekammer austritt. Die mindestens eine Durchtrittsöffnung ist in einem radial äußeren Bereich der Trennscheibe angeordnet. Somit wird ein definierter Flussweg der Süßwarenmasse in der ersten Teilkammer von radial innen nach radial außen, von dort in die zweite Teilkammer und in dieser von radial außen nach radial innen erreicht.

Bei der Temperiermaschine kann es sich um eine Temperiersäule mit einer Mehrzahl von in der Säule abwechselnd übereinander angeordneten Temperiermediumkammern und Süßwarenmassekammern handeln. Wenn die Temperiermediumkammern und die Süßwarenmassekammern jeweils scheibenförmig ausgebildet sind, bezeichnet man eine solche Temperiersäule auch als Scheibentemperer.

Die Temperiermaschine kann eine Mehrzahl unterschiedlicher Behandlungsstufen für die Süßwarenmasse aufweisen. Dazu gehört mindestens eine Kristallisationsstufe, in der die gewünschten stabilen Fettkristalle in der Süßwarenmasse gebildet werden. Die oberhalb beschriebenen Bauteile können sich mindestens in dieser Kristallisationsstufe befinden.

Es ist aber auch möglich, dass sich diese Bauteile ebenfalls in anderen Stufen der Temperiermaschine befinden. Andere mögliche Stufen sind z. B. eine Dekristallisationsstufe, eine Kühlstufe und eine Nachwärm- und Mischstufe.

Bei der Süßwarenmasse kann es sich insbesondere um eine Schokolademasse und/oder bei dem Temperiermedium um Wasser handeln. Andere Süßwarenmassen können aber ebenfalls mittels der neuen Temperiermaschine temperiert werden. Andere Temperiermedien können zum Einsatz kommen.

Eine Süßwarenmassekammer liegt definitionsgemäß in der axialen Richtung zwischen zwei benachbarten Temperiermediumkammern. Die Süßwarenmassenkammer beginnt mit einer radial innen liegenden Eintrittsstelle der Süßwarenmasse und endet mit einer ebenfalls radial innen liegenden Austrittsstelle.

Bei dem Temperiermedium, das durch die erste Temperiermediumkammer fließt, und dem Temperiermedium, das durch die zweite Temperiermediumkammer fließt, kann es sich stoffmäßig um ein und dasselbe Temperiermedium - z. B. Wasser - handeln. Dieses Temperiermedium kann durch einen gemeinsamen Temperiermediumkreis fließen, an den die beiden Temperiermediumkammern angeschlossen sind. Es ist aber auch möglich, dass es sich um getrennte Temperiermediumkreise handelt, die der ersten Temperiermediumkammer bzw. der zweiten Temperiermediumkammer zugewiesen sind. Es ist aber auch möglich, dass es sich bei dem Temperiermedium, das durch die erste Temperiermediumkammer fließt, und dem Temperiermedium, das durch die zweite Temperiermediumkammer fließt, um stoffmäßig unterschiedliche Temperiermedium handelt.

Für eine Regelung der Temperierung der Süßwarenmasse ist es möglich, in dem radial innen gebildeten Ringspalt zwischen der Welle und der Temperiermediumkammer die Temperatur der dort durchfließenden Süßwarenmasse zu bestimmen und in Abhängigkeit davon die Temperatur des Temperiermediums zu regeln.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Mischwerkzeug die Rede ist, ist dies so zu verstehen, dass genau ein Mischwerkzeug, zwei Mischwerkzeuge oder mehr Mischwerkzeuge vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Ansicht eines Teils einer ersten beispielhaften Ausführungsform einer neuen Temperiermaschine.
- **Fig. 2**: zeigt eine Schnittansicht gemäß Linie A-A in Fig. 1.
- **Fig. 3**: zeigt eine Schnittansicht gemäß Linie B-B in Fig. 1.
- **Fig. 4**: zeigt eine Ansicht eines Teils einer zweiten beispielhaften Ausführungsform der neuen Temperiermaschine.
- **Fig. 5**: zeigt eine Schnittansicht gemäß Linie A-A in Fig. 4.
- **Fig. 6**: zeigt eine Schnittansicht gemäß Linie B-B in Fig. 4.
- **Fig. 7**: zeigt eine perspektivische Ansicht einer ersten beispielhaften Ausführungsform eines Mischwerkzeugs der neuen Temperiermaschine.
- **Fig. 8**: zeigt das Mischwerkzeug gemäß Fig. 7 in einer Ansicht von oben.
- **Fig. 9**: zeigt das Mischwerkzeug gemäß Fig. 7 in einer Ansicht von unten.
- **Fig. 10**: zeigt eine Schnittansicht des Mischwerkzeugs gemäß Linie A-A in Fig. 9.
- **Fig. 11**: zeigt eine perspektivische Ansicht einer zweiten beispielhaften Ausführungsform des Mischwerkzeugs der neuen Temperiermaschine.
- **Fig. 12**: zeigt das Mischwerkzeug gemäß Fig. 11 in einer Ansicht von oben.
- **Fig. 13**: zeigt das Mischwerkzeug gemäß Fig. 11 in einer Ansicht von unten.
- **Fig. 14**: zeigt eine Ansicht einer dritten beispielhaften Ausführungsform eines Mischwerkzeugs der neuen Temperiermaschine in einer Ansicht von oben.
- **Fig. 15**: zeigt das Mischwerkzeug gemäß Fig. 14 in einer Ansicht von unten.
- **Fig. 16**: zeigt eine Ansicht einer vierten beispielhaften Ausführungsform eines Mischwerkzeugs der neuen Temperiermaschine in einer Ansicht von oben.
- **Fig. 17**: zeigt das Mischwerkzeug gemäß Fig. 16 in einer Ansicht von unten.

### FIGURENBESCHREIBUNG

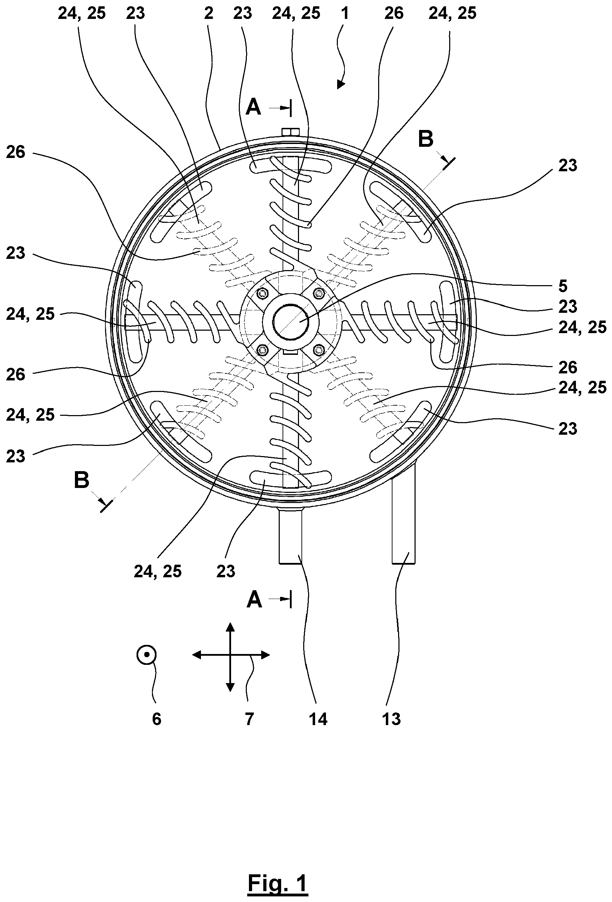

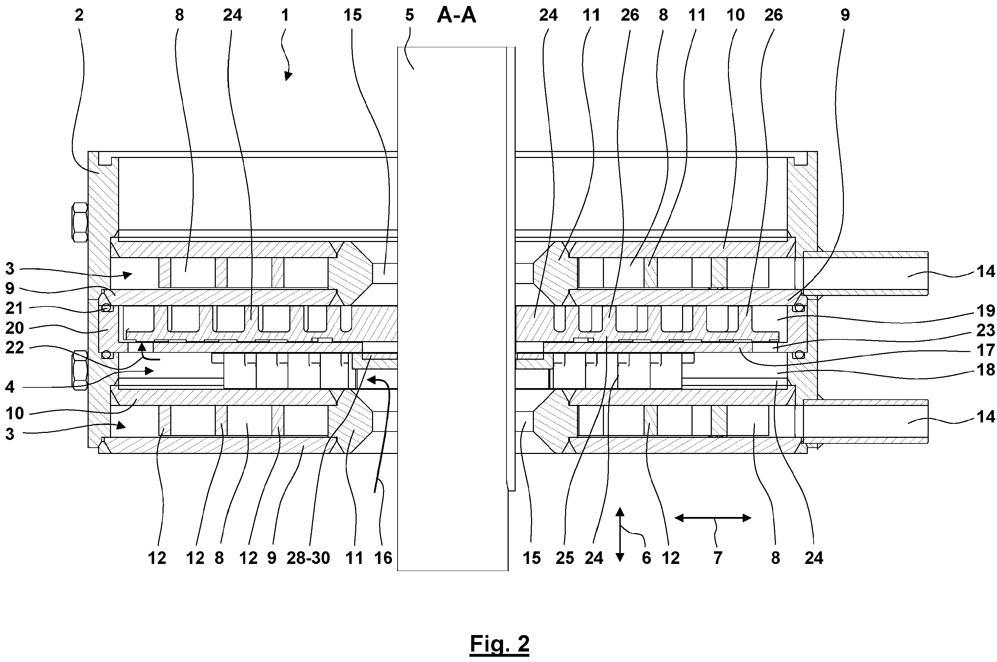

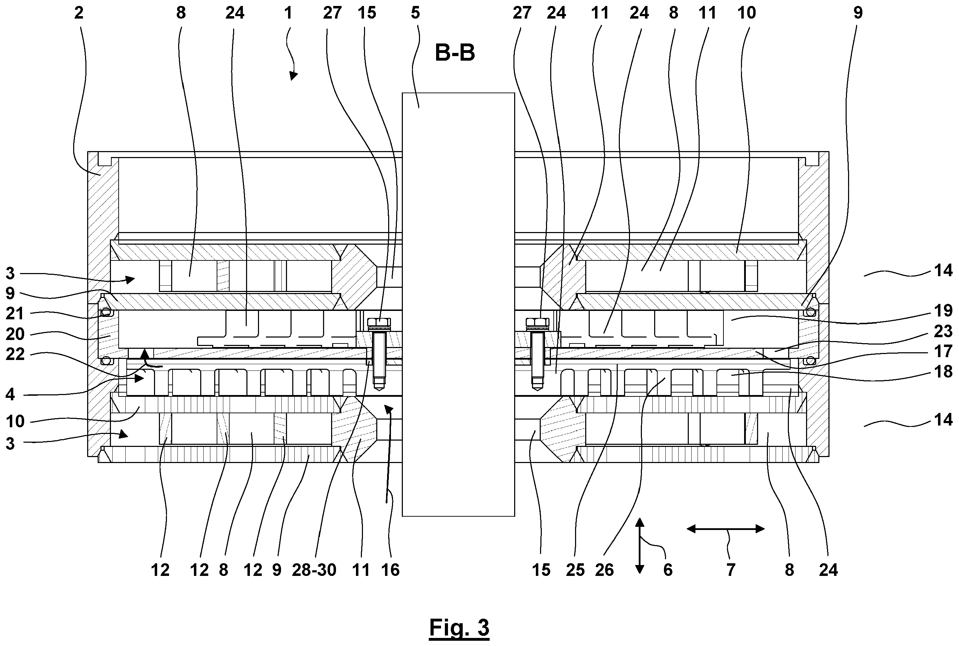

Fig. 1 bis 3 zeigen verschiedene Ansichten eines Teils einer ersten beispielhaften Ausführungsform einer neuen Temperiermaschine 1 zum Temperieren einer Süßwarenmasse.

Bezüglich der nicht dargestellten Teile der Temperiermaschine 1 wird auf die Patentanmeldung DE 198 54 204 A1 der Anmelderin und insbesondere auf die dortige Fig. 1 verwiesen. Die Details des elektrischen Antriebs und der Anschlüsse der Temperiermaschine 1 für das Temperiermedium und die Süßwarenmasse sind dem Fachmann für sich genommen bekannt und werden daher in dieser Anmeldung nicht weiter erläutert.

Die Temperiermaschine 1 ist als Temperiersäule und Scheibentemperer mit einer Mehrzahl von übereinander angeordneten Stufen ausgebildet, die jeweils einer unterschiedlichen Behandlung der Süßwarenmasse zugeordnet sind. In den Zeichnungen ist nur ein Teil der Stufen gezeigt. Dabei handelt es sich um eine Kristallisationsstufe. Es könnte sich aber auch um eine andere Stufe der Temperiermaschine 1 handeln. Die vollständige Temperiermaschine 1 weist weitere Stufen auf.

Die Temperiermaschine 1 weist ein Gehäuse 2 auf, in dem die verschiedenen Stufen der Temperiermaschine 1 angeordnet sind. Im vorliegenden Fall weist das Gehäuse 2 eine zylindrische Form auf. Es könnte aber auch eine andere Geometrie besitzen.

Innerhalb des Gehäuses 2 ist im Sinne eines scheibenartigen Aufbaus eine Mehrzahl von Temperiermediumkammern 3 und von Süßwarenmassekammern 4 angeordnet. Die Temperiermediumkammern 3 dienen für den Durchfluss eines Temperiermediums. Die Süßwarenmassenkammern 4 dienen für den Durchfluss der Süßwarenmasse. In dem gezeigten Ausschnitt aus der vollständigen Temperiermaschine 1 sind zwei Temperiermediumkammern 3 und eine Süßwarenmassekammer 4 gezeigt. Die vollständige Temperiermaschine 1 weist aber weitere Temperiermediumkammern 3 und Süßwarenmassekammern 4 auf.

Die Süßwarenmassekammer 4 ist zwischen zwei benachbarten Temperiermediumkammern 3 angeordnet, um die sich gerade in der jeweiligen Süßwarenmassekammer 4 befindende Süßwarenmasse temperaturmäßig zu behandeln, d. h. zu "tempern". Im Falle der Kristallisationsstufe handelt es sich um ein Kühlen der Süßwarenmasse zum Bilden stabiler Fettkristalle.

Durch das Gehäuse 4 erstreckt sich eine zentrale Welle 5, die als Antriebswelle in der für sich genommen bekannten Weise ausgebildet und angeordnet ist. Die Welle 5 definiert die axiale Richtung 6. Dementsprechend ergibt sich die radiale Richtung 7.

Die Temperiermediumkammern 3 sind jeweils scheibenartig ausgebildet und weisen einen Innenraum 8 auf, durch den das Temperiermedium fließt. Der Innenraum 8 wird durch verschiedene Elemente begrenzt bzw. definiert. Dazu gehören im vorliegenden Fall ein Boden 9, ein Deckel 10, eine radial innenliegende Seitenwand 11 und ein Trennsteg 12. Das Temperiermedium wird über eine Zuleitung 13 der Temperiermediumkammer 3 zugeführt und tritt durch eine Ausgangsleitung 14 wieder aus dieser aus. Der Trennsteg 12 ist spiralförmig angeordnet, so dass sich ein entsprechender Strömungspfad des Temperiermediums durch die Temperiermediumkammer 3 und somit die gewünschte Verweildauer und temperaturmäßige Wirkung ergibt.

In der radialen Richtung 7 gesehen ist zwischen der Welle 5 und der Temperiermediumkammer 3 ein Eintrittsspalt 15 gebildet, durch den die Süßwarenmasse aufgrund der Wirkung einer Pumpe (nicht dargestellt) gemäß Pfeil 16 fließt.

Damit gelangt die Süßwarenmasse in die Süßwarenmassekammer 4. Die Süßwarenmassekammer 4 ist in der axialen Richtung 6 gesehen zwischen dem Deckel 10 einer unteren Temperiermediumkammer 3 und dem Boden 9 der darüberliegenden Temperiermediumkammer 3 gebildet.

In der Süßwarenmassekammer 4 ist eine Trennscheibe 17 angeordnet, wodurch eine erste Teilkammer 18 und eine zweite Teilkammer 19 gebildet werden. Die Trennscheibe 17 weist radial außen einen Kragen 20 auf, über den sie feststehend in dem Gehäuse 2 gelagert ist. Die Trennscheibe 17 weist also eine tablettartige Form auf. Für eine Abdichtung der Süßwarenmassekammer 4 gegenüber dem Gehäuse 2 ist eine Dichtung 21 vorhanden. Für den Durchfluss der Süßwarenmasse von der ersten Teilkammer 18 in der axialen Richtung gemäß Pfeil 22 weist die Trennscheibe 17 eine Mehrzahl von Durchtrittsöffnungen 23 auf. Die Durchtrittsöffnungen 23 sind in diesem Fall randgeschlossen und als beabstandete kreisringabschnittsförmige Langlöcher ausgebildet. Andere Ausbildungsformen wären aber ebenfalls möglich.

Die Trennscheibe 17 ist somit so gelagert, dass sie nicht gedreht und nicht in der axialen Richtung 6 bewegt werden kann.

In jeder der Teilkammern 18, 19 ist jeweils ein Mischwerkzeug 24 angeordnet. Die Mischwerkzeuge 24 sind zum Mischen der Süßwarenmasse über die Welle 5 und den diesen antreibenden Antrieb (nicht dargestellt) drehend angetrieben.

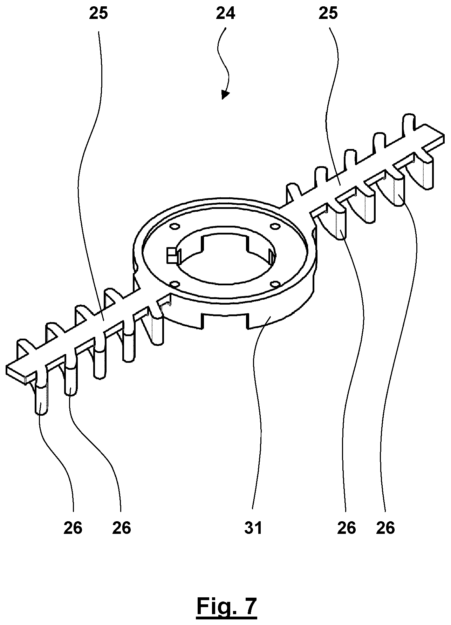

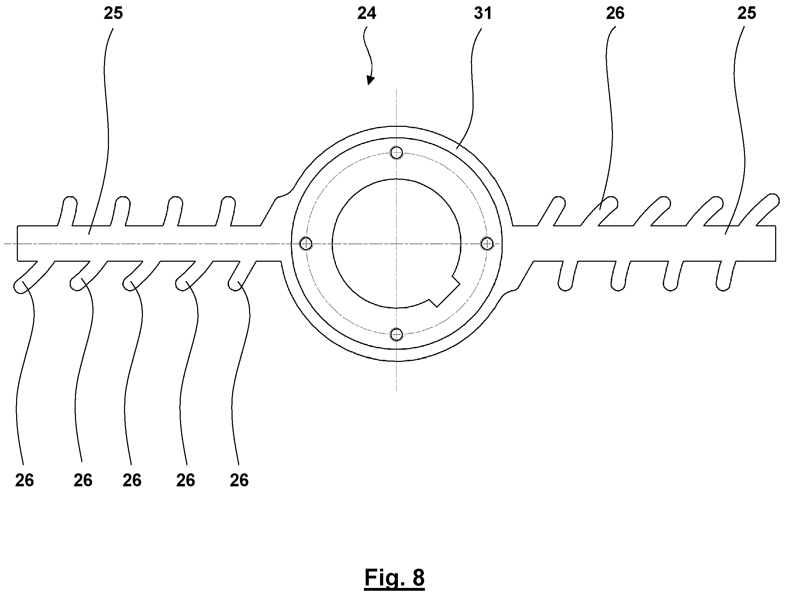

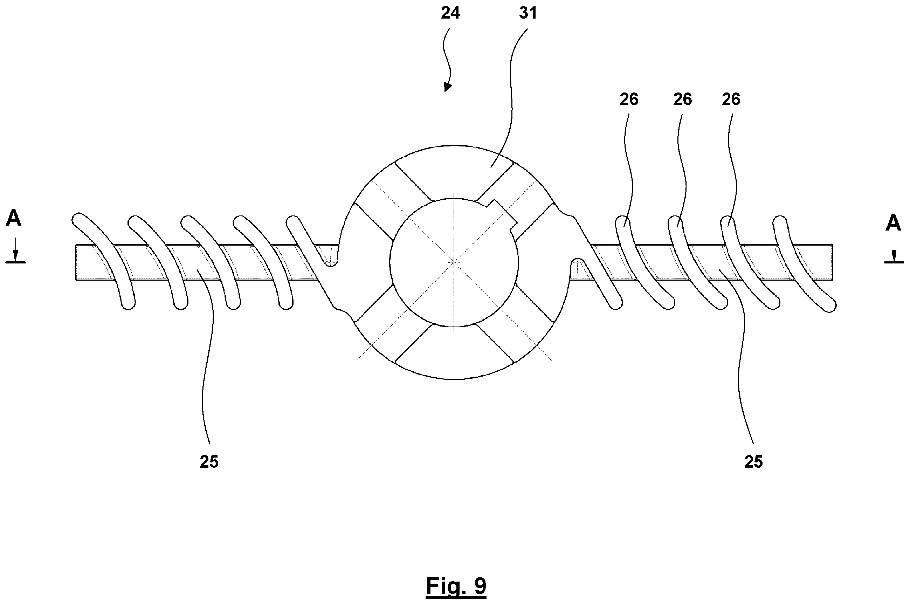

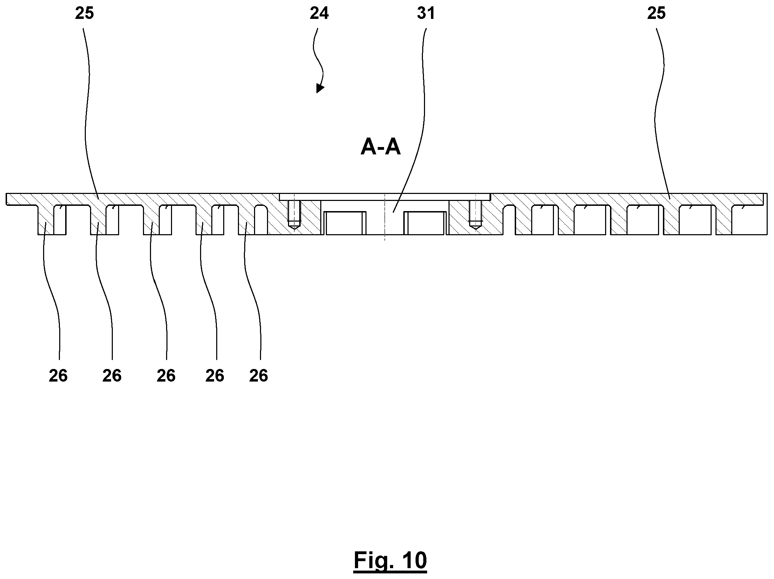

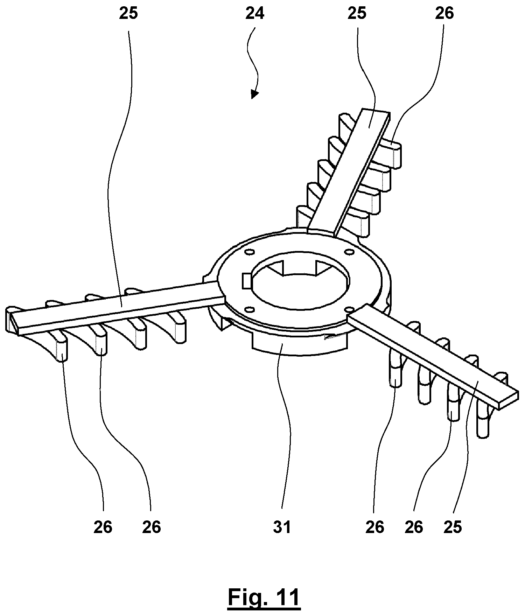

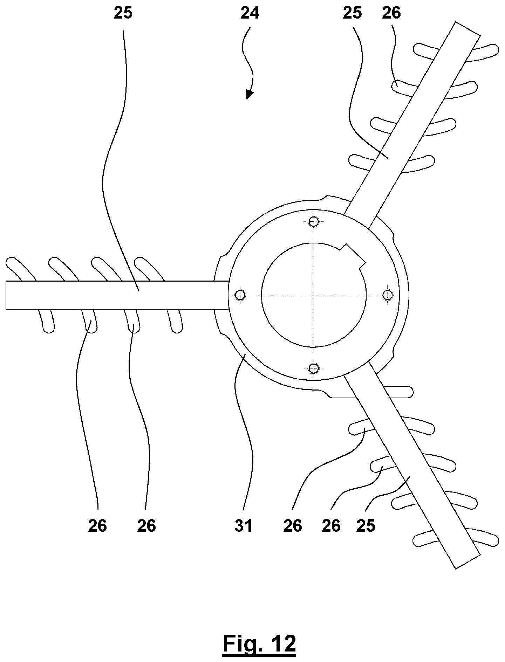

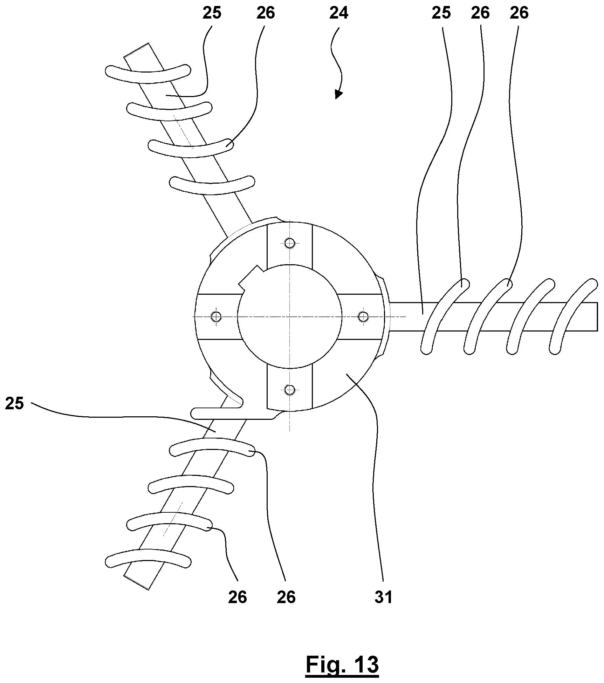

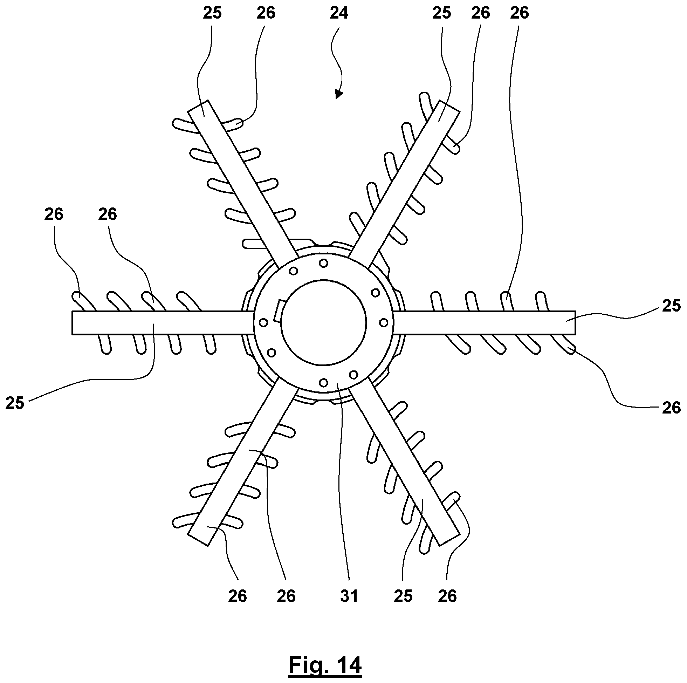

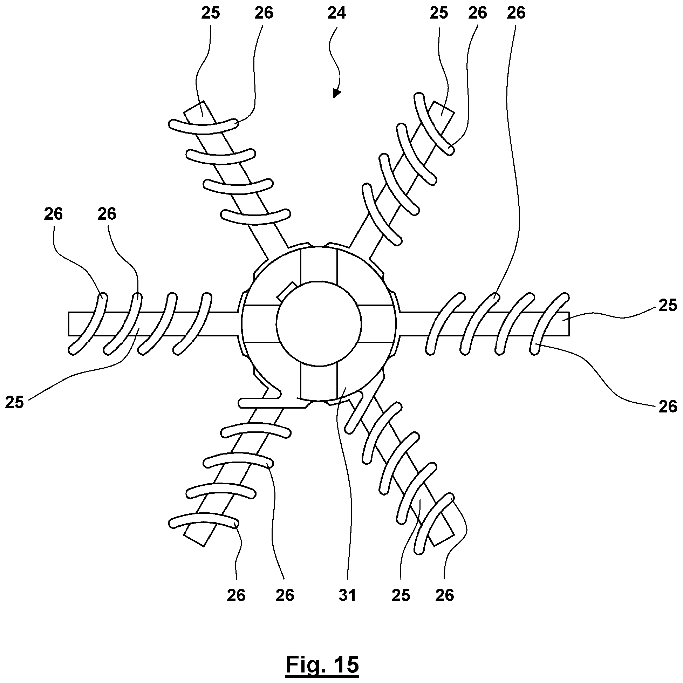

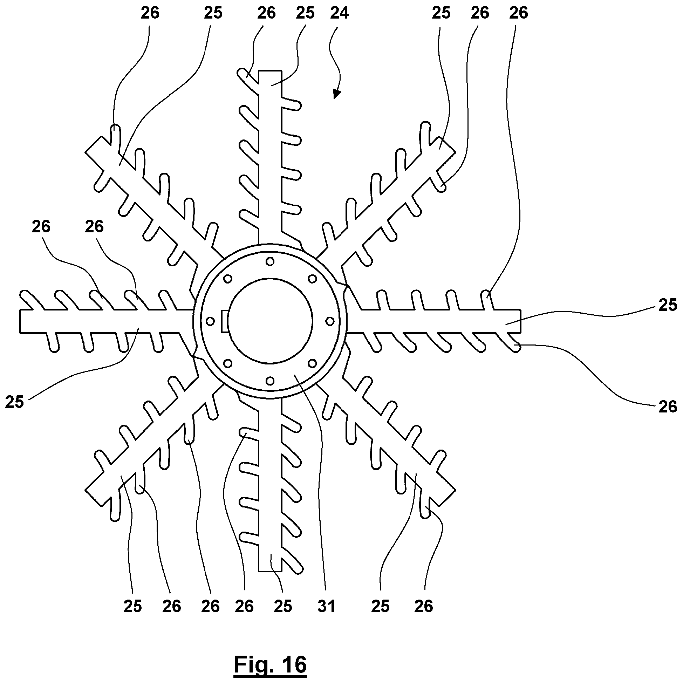

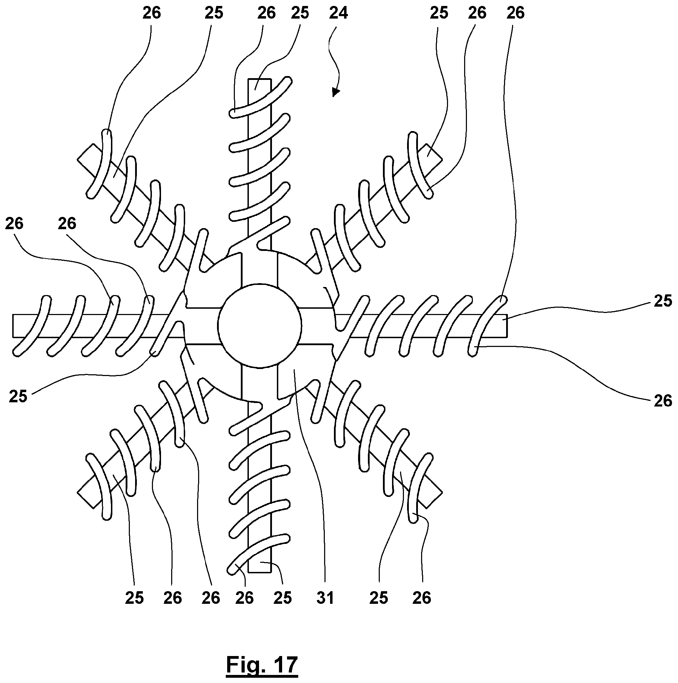

Im vorliegenden Beispiel weist das Mischwerkzeug 24 eine Mehrzahl beabstandet angeordneter Mischarme 25 mit jeweils einer Mehrzahl von Mischelementen 26 auf. Im vorliegenden Fall handelt es sich um vier Mischarme 25 mit jeweils fünf Mischelementen 26. Andere Ausbildungen sind aber ebenfalls möglich, wie im weiteren Verlauf unter Bezugnahme auf die Fig. 7 bis 17 deutlich wird.

Die Mischwerkzeuge 24 sind im vorliegenden Fall fest miteinander verbunden. Die Verbindung erfolgt somit durch die Trennscheibe 17 hindurch. Im vorliegenden Fall ist die Verbindung mittels einer Schraubverbindung 27 realisiert. Andere Verbindungsarten wären aber ebenfalls möglich. Die Schraubverbindung 27 oder andere Verbindung stellt einen ersten Teil der Lagerung der Mischwerkzeuge 24 dar.

Einen zweiten Teil dieser Lagerung bildet eine Lagereinrichtung 28, die einen auf der Trennscheibe 17 angeordneten Lagerring 29 und an der Unterseite der Mischarme 25 vorgesehene korrespondierende Lagernuten 30 aufweist. Der Lagerring 29 kann fest oder beweglich mit dem Mischarm 25 verbunden sein. In dieser Weise wird eine rotatorische Bewegung des Mischwerkzeugs 24 relativ zu der Trennscheibe 17 ermöglicht und eine translatorische Bewegung relativ zu der Trennscheibe 17 auf die Trennscheibe 17 zu verhindert.

Durch diese Lagerung der Mischwerkzeuge 24 wird sichergestellt, dass diese aufgrund ihrer Drehung die gewünschte Mischfunktion in Bezug auf die Süßwarenmasse erbringen können, es aber zu keinem Verschleiß hervorrufenden Kontakt mit der Unterseite der Trennscheibe 17 bzw. der Unterseite des Bodens 9 der darüberliegenden Temperiermediumkammer 3 kommt.

Nach ihrem Fluss von radial außen nach radial innen und der dabei stattfindenden Durchmischung gelangt die Süßwarenmasse wieder in den zentralen Bereich der Temperiermaschine 1. Dort beginnt dann die nächste Temperiermediumkammer 3, die die Süßwarenmasse durch den weiteren Eintrittsspalt 15 passiert.

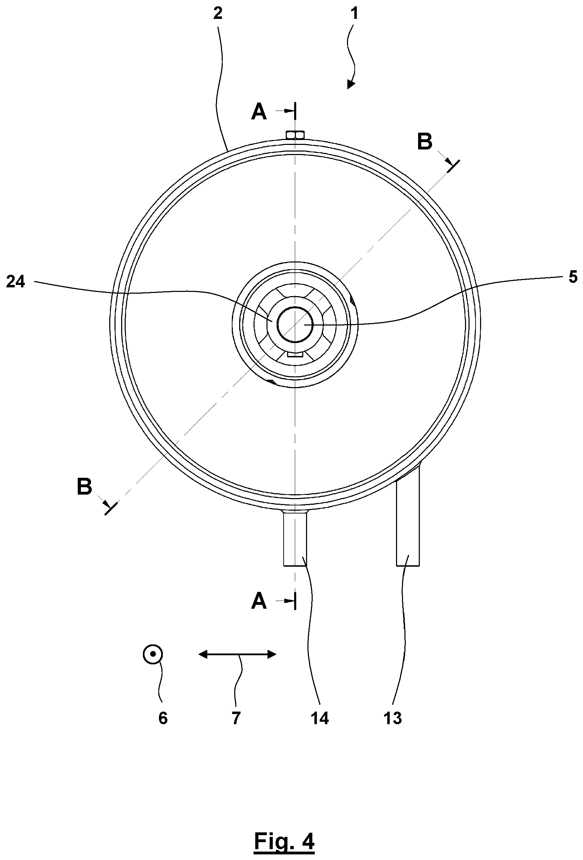

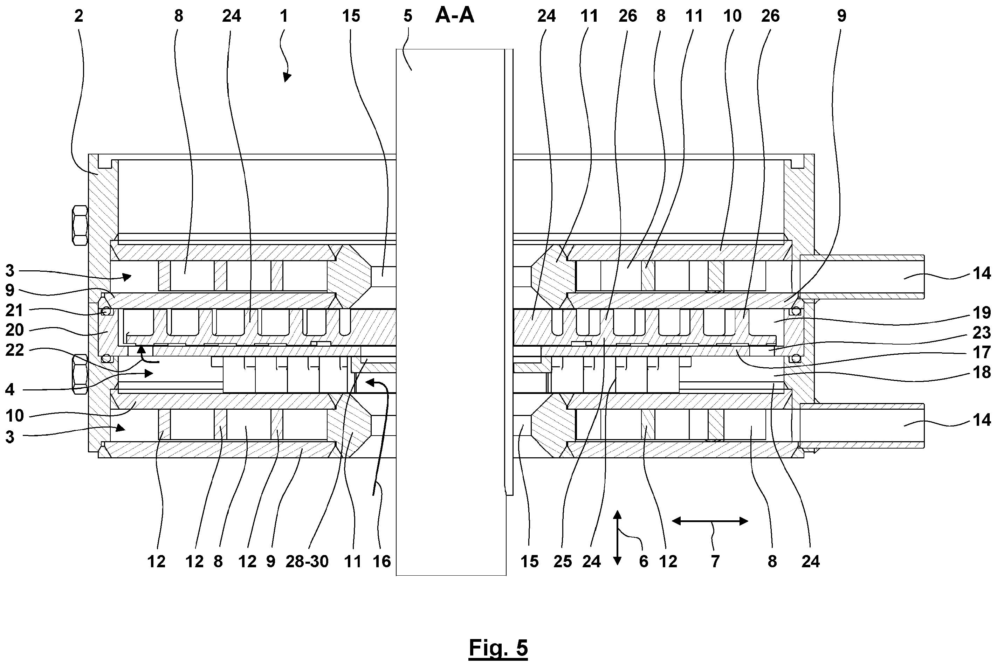

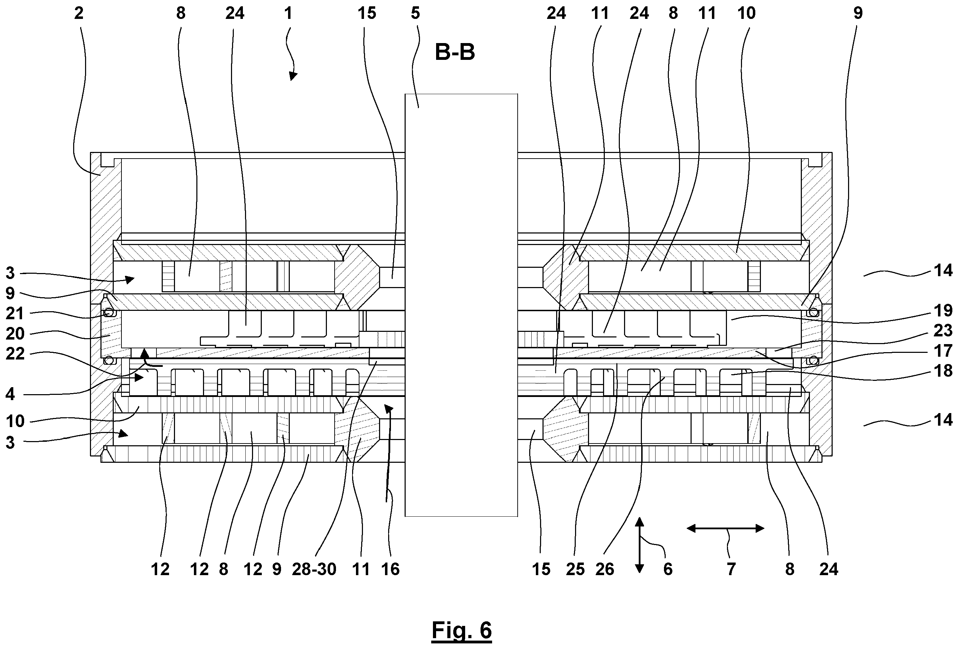

Die in den Fig. 4 bis 6 gezeigte zweite beispielhafte Ausführungsform der neuen Temperiermaschine 1 weist viele Gemeinsamkeiten mit der oberhalb beschriebenen ersten Ausführungsform der Temperiermaschine 1 auf, so dass auf diese Ausführungen verwiesen und im Folgenden nur die Unterschiede beschrieben werden.

Im vorliegenden Ausführungsbeispiel sind die Mischwerkzeuge 24 nicht miteinander verbunden. Sie können sich auch in der axialen Richtung 6 frei bewegen. Die Bewegung endet allerdings an dem in der axialen Richtung 6 gesehen nächsten feststehenden Bauteil. Ansonsten werden die Mischwerkzeuge 24 in der gleichen Weise durch die Welle 5 drehend angetrieben.

Fig. 7 bis 17 zeigen verschiedene Ansichten unterschiedlicher Ausführungsformen des Mischwerkzeugs 24. Die verschiedenen Ausführungsformen der Mischwerkzeuge 24 unterscheiden sich durch unterschiedliche Anzahl und Anordnungen von Mischarmen 25 und Mischelementen 26. Es ist erkennbar, dass die Mischarme 25 an einem Zentralkörper 31 angeordnet sind. Der Zentralkörper 31 dient weiterhin zur Übertragung des von der Welle 5 bereitgestellten Drehmoments auf das jeweilige Mischwerkzeug 24.

### BEZUGSZEICHENLISTE

- 1: Temperiermaschine
- 2: Gehäuse
- 3: Temperiermediumkammer
- 4: Süßwarenmassekammer
- 5: Welle
- 6: axiale Richtung
- 7: radiale Richtung
- 8: Innenraum
- 9: Boden
- 10: Deckel
- 11: Seitenwand
- 12: Trennsteg
- 13: Zuleitung
- 14: Ausgangsleitung
- 15: Eintrittsspalt
- 16: Pfeil
- 17: Trennscheibe
- 18: erste Teilkammer
- 19: zweite Teilkammer
- 20: Kragen
- 21: Dichtung
- 22: Pfeil
- 23: Durchtrittsöffnung
- 24: Mischwerkzeug
- 25: Mischarm
- 26: Mischelement
- 27: Schraubverbindung
- 28: Lagereinrichtung
- 29: Lagerring
- 30: Lagernut
- 31: Zentralkörper

## Patentansprüche

1. Temperiermaschine (1) zum Temperieren einer Süßwarenmasse, mit
einer Welle (5), die sich in einer axialen Richtung (6) der Temperiermaschine (1) erstreckt und diese axiale Richtung (6) definiert,
einer ersten Temperiermediumkammer (3) für den Durchfluss eines Temperiermediums, wobei in einer radialen Richtung (7) zwischen der Welle (5) und der ersten Temperiermediumkammer (3) ein Eintrittsspalt (15) gebildet ist,
einer in der axialen Richtung (6) der Temperiermaschine (1) benachbarten zweiten Temperiermediumkammer (3) für den Durchfluss eines Temperiermediums, wobei in der radialen Richtung (7) zwischen der Welle (5) und der zweiten Temperiermediumkammer (3) ein Austrittsspalt gebildet ist,
einer Süßwarenmassekammer (4) für den Durchfluss der Süßwarenmasse, wobei die Süßwarenmassekammer (4) in der axialen Richtung (6) zwischen der ersten Temperiermediumkammer (3) und der zweiten Temperiermediumkammer (3) angeordnet ist und wobei die Süßwarenmasse durch den Eintrittsspalt (15) in die Süßwarenmassekammer (4) eintritt und durch den Austrittsspalt aus der Süßwarenmassekammer (4) austritt,
einem Mischwerkzeug (24), das zum Mischen der Süßwarenmasse durch die Welle (5) drehend antreibbar in der Süßwarenmassekammer (4) angeordnet ist, und
eine Trennscheibe (17), die nicht-drehbar und in der axialen Richtung (6) nicht-verschieblich so in der Süßwarenmassekammer (4) gelagert ist, dass eine erste Teilkammer (18) und eine zweite Teilkammer (19) gebildet wird, wobei die Trennscheibe (17) in einem radial außen liegenden Bereich eine Durchtrittsöffnung (23) aufweist, die für einen Durchfluss der Süßwarenmasse von der ersten Teilkammer (18) in der axialen Richtung (6) durch die Durchtrittsöffnung (23) in die zweite Teilkammer (19) ausgebildet ist,
**dadurch gekennzeichnet, dass** das Mischwerkzeug (24) mittels einer Lagereinrichtung (28) derart an der Trennscheibe (17) gelagert ist, dass eine rotatorische Bewegung relativ zu der Trennscheibe (17) ermöglicht und eine translatorische Bewegung relativ zu der Trennscheibe (17) auf die Trennscheibe (17) zu verhindert oder eingeschränkt ist.

2. Temperiermaschine (1) nach Anspruch 1, **gekennzeichnet durch** ein Gehäuse (2), wobei die Trennscheibe (17) an dem Gehäuse (2) gelagert ist.

3. Temperiermaschine (1) nach einem der vorhergehenden Ansprüche, **dadurch gekennzeichnet, dass** ein erstes Mischwerkzeug (24) und ein zweites Mischwerkzeug (24) vorhanden ist, wobei das erste Mischwerkzeug (24) in der ersten Teilkammer (18) und das zweite Mischwerkzeug (24) in der zweiten Teilkammer (19) angeordnet ist.

4. Temperiermaschine (1) nach Anspruch 3, **dadurch gekennzeichnet, dass** das erste Mischwerkzeug (24) und das zweite Mischwerkzeug (24) fest miteinander verbunden sind.

5. Temperiermaschine (1) nach einem der vorhergehenden Ansprüche, **dadurch gekennzeichnet, dass** sich das Mischwerkzeug (24) beabstandet zu der Oberfläche der Trennscheibe (17) befindet.

6. Temperiermaschine (1) nach einem der vorhergehenden Ansprüche, **dadurch gekennzeichnet, dass** die Lagereinrichtung (28) einen Lagerring (29) aufweist, der einen Kontakt zwischen dem Mischwerkzeug (24) und der Trennscheibe (17) verhindert oder einschränkt.

7. Temperiermaschine (1) nach einem der vorhergehenden Ansprüche, **dadurch gekennzeichnet, dass** die Trennscheibe (17) eine Mehrzahl von Durchtrittsöffnungen (23) aufweist und diese randgeschlossen ausgebildet sind.

8. Temperiermaschine (1) nach Anspruch 7, **dadurch gekennzeichnet, dass** die DurchtrittsÖffnungen (23) als beabstandete kreisringabschnittsförmige Langlöcher ausgebildet sind.

9. Temperiermaschine (1) nach einem der vorhergehenden Ansprüche, **dadurch gekennzeichnet, dass** das Mischwerkzeug (24) eine Mehrzahl beabstandet angeordneter Mischarme (25) mit jeweils einer Mehrzahl von Mischelementen (26) aufweist.

10. Temperiermaschine (1) nach einem der vorhergehenden Ansprüche, **dadurch gekennzeichnet, dass** das Mischwerkzeug (24) als Mischscheibe mit einer Mehrzahl von Mischelementen (26) ausgebildet ist.

11. Temperiermaschine (1) nach einem der vorhergehenden Ansprüche, **dadurch gekennzeichnet, dass** es sich bei
der Temperiermaschine (1) um eine Temperiersäule und einen Scheibentemperer mit einer Kristallisationsstufe handelt, wobei die erste Temperiermediumkammer (3), die zweite Temperiermediumkammer (3) und die Süßwarenmassekammer (4) Teil der Kristallisationsstufe sind.

12. Temperiermaschine (1) nach einem der vorhergehenden Ansprüche, **dadurch gekennzeichnet, dass** es sich bei
der Süßwarenmasse um eine Schokolademasse und/oder bei dem Temperiermedium um Wasser handelt.

## Claims

1. Tempering machine (1) for tempering a confectionery mass, comprising
a shaft (5) which extends in an axial direction (6) of the tempering machine (1) and defines this axial direction (6),
a first tempering medium chamber (3) for the passage of a tempering medium, wherein an inlet gap (15) is formed in a radial direction (7) between the shaft (5) and the first tempering medium chamber (3),
a second tempering medium chamber (3) adjacent in the axial direction (6) of the tempering machine (1) for the passage of a tempering medium, wherein an outlet gap is formed in the radial direction (7) between the shaft (5) and the second tempering medium chamber (3),
a confectionery mass chamber (4) for the passage of the confectionery mass, wherein the confectionery mass chamber (4) is arranged in the axial direction (6) between the first tempering medium chamber (3) and the second tempering medium chamber (3) and wherein the confectionery mass enters the confectionery mass chamber (4) through the inlet gap (15) and exits the confectionery mass chamber (4) through the outlet gap,
a mixing tool (24) which is arranged in the confectionery mass chamber (4) such as to be rotatably drivable by the shaft (5) for mixing the confectionery mass, and
a separating disk (17) which is mounted non-rotatably and non-displaceably in the axial direction (6) in the confectionery mass chamber (4) in such a way that a first subchamber (18) and a second subchamber (19) are formed, the separating disk (17) having a through-opening (23) in a radially outer region, which is designed for a passage of the confectionery mass from the first subchamber (18) in the axial direction (6) through the through-opening (23) into the second subchamber (19),
**characterized in that** the mixing tool (24) is mounted on the separating disc (17) by means of a bearing device (28) in such a way that a rotational movement relative to the separating disc (17) is made possible and a translational movement relative to the separating disc (17) towards the separating disc (17) is prevented or restricted.

2. Tempering machine (1) according to claim 1, **characterized by** a housing (2), wherein the separating disc (17) is mounted to the housing (2).

3. Tempering machine (1) according to any of the preceding claims, **characterized in that** a first mixing tool (24) and a second mixing tool (24) are present, the first mixing tool (24) being arranged in the first subchamber (18) and the second mixing tool (24) being arranged in the second subchamber (19).

4. Tempering machine (1) according to claim 3, **characterized in that** the first mixing tool (24) and the second mixing tool (24) are firmly connected to one another.

5. Tempering machine (1) according to any of the preceding claims, **characterized in that** the mixing tool (24) is located at a distance from the surface of the separating disc (17).

6. Tempering machine (1) according to any of the preceding claims, **characterized in that** the bearing device (28) comprises a bearing ring (29) which prevents or restricts contact between the mixing tool (24) and the separating disc (17).

7. Tempering machine (1) according to any of the preceding claims, **characterized in that** the separating disc (17) comprises a plurality of passage openings (23) and these have closed edges.

8. Tempering machine (1) according to claim 7, **characterized in that** the passage openings (23) are designed as spaced-apart circular ring section-shaped elongated holes.

9. Tempering machine (1) according to any of the preceding claims, **characterized in that** the mixing tool (24) comprises a plurality of spaced-apart mixing arms (25) each having a plurality of mixing elements (26).

10. Tempering machine (1) according to any of the preceding claims, **characterized in that** the mixing tool (24) is designed as a mixing disc having a plurality of mixing elements (26).

11. Tempering machine (1) according to any of the preceding claims, **characterized in that**
the tempering machine (1) is a tempering column and a disc temperer having a crystallization stage, wherein the first tempering medium chamber (3), the second tempering medium chamber (3) and the confectionery mass chamber (4) are part of the crystallization stage.

12. Tempering machine (1) according to any of the preceding claims, **characterized in that**
the confectionery mass is a chocolate mass and/or the tempering medium is water.

## Revendications

1. Machine de thermorégulation (1) pour tempérer une masse de confiserie, avec
un arbre (5) qui s'étend dans une direction axiale (6) de la machine de thermorégulation (1) et définit cette direction axiale (6),
une première chambre de fluide de thermorégulation (3) pour le passage d'un fluide de thermorégulation, un interstice d'entrée (15) étant formé dans une direction radiale (7) entre l'arbre (5) et la première chambre de fluide de thermorégulation (3),
une deuxième chambre de fluide de thermorégulation (3) adjacente dans la direction axiale (6) de la machine de thermorégulation (1) pour le passage d'un fluide de thermorégulation, un interstice de sortie étant formé dans la direction radiale (7) entre l'arbre (5) et la deuxième chambre de fluide de thermorégulation (3),
une chambre de masse de confiserie (4) pour le passage de la masse de confiserie, la chambre à masse de confiserie (4) étant agencée dans la direction axiale (6) entre la première chambre à fluide de thermorégulation (3) et la deuxième chambre à fluide de thermorégulation (3) et la masse de confiserie pénétrant dans la chambre de masse de confiserie (4) par l'interstice d'entrée (15) et sortant de la chambre à masse de confiserie (4) par l'interstice de sortie,
un outil de mélange (24) qui est agencé dans la chambre à masse de confiserie (4) de manière à pouvoir être entraîné en rotation par l'arbre (5) pour mélanger la masse de confiserie, et
un disque de séparation (17) qui est monté de manière non rotative et non déplaçable dans la direction axiale (6) dans la chambre à masse de confiserie (4), de manière à former une première chambre partielle (18) et une deuxième chambre partielle (19), le disque de séparation (17) présentant, dans une zone située radialement à l'extérieur, une ouverture de passage (23) qui est conçue pour permettre à la masse de confiserie de s'écouler de la première chambre partielle (18) dans la direction axiale (6) à travers l'ouverture de passage (23) dans la deuxième chambre partielle (19),
**caractérisée en ce que** l'outil de mélange (24) est monté sur le disque de séparation (17) au moyen d'un dispositif de palier (28) de manière à permettre un mouvement de rotation par rapport au disque de séparation (17) et à empêcher ou limiter un mouvement de translation par rapport au disque de séparation (17) vers le disque de séparation (17).

2. Machine de thermorégulation (1) selon la revendication 1, **caractérisée par** un boîtier (2), le disque de séparation (17) étant monté sur le boîtier (2).

3. Machine de thermorégulation (1) selon l'une des revendications précédentes, **caractérisée en ce qu'**un premier outil de mélange (24) et un deuxième outil de mélange (24) sont prévus, le premier outil de mélange (24) étant agencé dans la première chambre partielle (18) et le deuxième outil de mélange (24) étant agencé dans la deuxième chambre partielle (19).

4. Machine de thermorégulation (1) selon la revendication 3, **caractérisée en ce que** le premier outil de mélange (24) et le deuxième outil de mélange (24) sont reliés de manière fixe l'un à l'autre.

5. Machine de thermorégulation (1) selon l'une des revendications précédentes, **caractérisée en ce que** l'outil de mélange (24) est espacé de la surface du disque de séparation (17).

6. Machine de thermorégulation (1) selon l'une des revendications précédentes, **caractérisée en ce que** le dispositif de palier (28) comporte une bague de palier (29) qui empêche ou limite le contact entre l'outil de mélange (24) et le disque de séparation (17).

7. Machine de thermorégulation (1) selon l'une des revendications précédentes, **caractérisée en ce que** le disque de séparation (17) comporte une pluralité d'ouvertures de passage (23) qui sont fermées sur leurs bords.

8. Machine de thermorégulation (1) selon la revendication 7, **caractérisée en ce que** les ouvertures de passage (23) sont réalisées sous forme de trous oblongs espacés en forme de segments d'anneaux circulaires.

9. Machine de thermorégulation (1) selon l'une des revendications précédentes, **caractérisée en ce que** l'outil de mélange (24) comporte une pluralité de bras de mélange (25) espacés les uns des autres et comportant chacun une pluralité d'éléments de mélange (26).

10. Machine de thermorégulation (1) selon l'une des revendications précédentes, **caractérisée en ce que** l'outil de mélange (24) est conçu comme un disque de mélange avec une pluralité d'éléments de mélange (26).

11. Machine de thermorégulation (1) selon l'une des revendications précédentes, **caractérisée en ce que** la machine de thermorégulation (1) comprend une colonne de thermorégulation et un tempéreur à disque avec un étage de cristallisation, la première chambre de fluide de thermorégulation (3), la deuxième chambre de fluide de thermorégulation (3) et la chambre de masse de confiserie (4) faisant partie de l'étage de cristallisation.

12. Machine de thermorégulation (1) selon l'une des revendications précédentes, **caractérisée en ce que** la masse de confiserie
est une masse de chocolat et/ou le fluide de thermorégulation est de l'eau.
